# EUROPEAN PATENT APPLICATION

(11) **EP 4 549 113 A1**
(43) Date of publication of application: **07.05.2025**
(21) Application number: 24206621.5
(22) Date of filing: 15.10.2024
(51) Int. Cl.: B26D 7/26, B26D 1/143, B26D 1/153, B26D 3/28, B26D 5/20, B26D 5/38, B26D 7/01, B26D 7/06, B26D 7/14

(54) **FOOD PRODUCT SLICER AND ASSOCIATED GAUGE PLATE CONTROL KNOB**

(30) Priority: 31.10.2023 US 202363594573 P; 04.10.2024 US 202418906830
(71) Applicant: Illinois Tool Works Inc., Glenview IL 60025 (US)
(72) Inventor: BIRD, Matthew W., Glenview, 60025 (US); WAAG, Terry A., Glenview, 60025 (US)
(74) Representative: HGF

(57) **Abstract**

A food product slicer includes a base, a knife mounted for rotation relative to the base, a carriage assembly mounted to the base for reciprocal movement back and forth past a cutting edge of the knife, a gauge plate mounted for movement between a closed position that prevents slicing and multiple open positions that permit slicing at respective thicknesses and a gauge plate control knob including a grip part and a cam part with a cam slot, wherein the grip part and the cam part are molded together as a monolithic unit.

## Description

### TECHNICAL FIELD

This application relates generally to food product slicers of the type commonly used to slice bulk food products and, more specifically, to a gauge plate knob in such a food product slicer.

### BACKGROUND

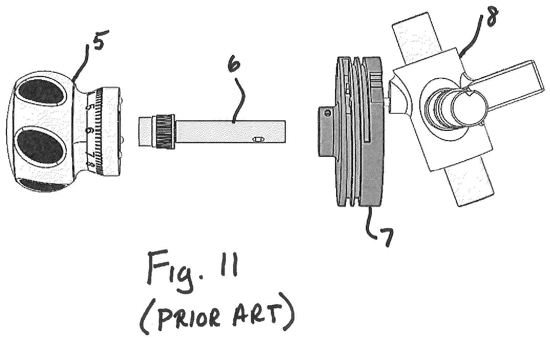

Typical reciprocating food slicers have a rotatable, circular or disc-like slicing blade, an adjustable gauge plate for determining the thickness of the slice and a carriage for supporting the food as it is moved back and forth past the cutting edge of the knife during slicing. A drive motor is typically linked to drive the carriage back and forth during an automatic slicing operation carried out by a controller of the slicer. The gauge plate is situated along the edge of the knife toward the front of a slicing stroke and is laterally movable with respect to the knife for determining the thickness of the slices to be cut. A manually rotatable adjustment or indexing knob is provided for setting a spacing between the plane of the gauge plate surface and the plane of the knife edge for the purpose of slicing so that operators can select a thickness of slices to be produced. In the past, per Fig. 11, such a knob 5 has been coupled to a separate shaft component 6, which in turn was coupled to a separate cam component 7 that engages with a follower 8, where movement of the follower 8 caused movement of the gauge plate. This arrangement is complex in turns of part count, assembly required etc.

Accordingly, it would be desirable to provide a slicer with an improved indexing knob.

### SUMMARY

In one aspect, a food product slicer includes a base, a knife mounted for rotation relative to the base, a carriage assembly mounted to the base for reciprocal movement back and forth past a cutting edge of the knife, and a gauge plate mounted for movement between a closed position that prevents slicing and multiple open positions that permit slicing at respective thicknesses. A knob is rotatable and linked for moving the gauge plate, wherein the knob comprises a grip part and a cam part, wherein at least part of the grip part is external of the base and at least part of the cam part is internal of the base or accessible from within the base, wherein the grip part and the cam part are formed together as a monolithic unit.

In another aspect, a food product slicer includes a base, a knife mounted for rotation relative to the base, a carriage assembly mounted to the base for reciprocal movement back and forth past a cutting edge of the knife, a gauge plate mounted for movement between a closed position that prevents slicing and multiple open positions that permit slicing at respective thicknesses and a gauge plate control knob including a grip part and a cam part with a cam slot, wherein the grip part and the cam part are molded together as a monolithic unit.

The details of one or more embodiments are set forth in the accompanying drawings and the description below. Other features, objects, and advantages will be apparent from the description and drawings, and from the claims.

### BRIEF DESCRIPTION OF DRAWINGS

Figs. 1 and 2 show a food product slicer;

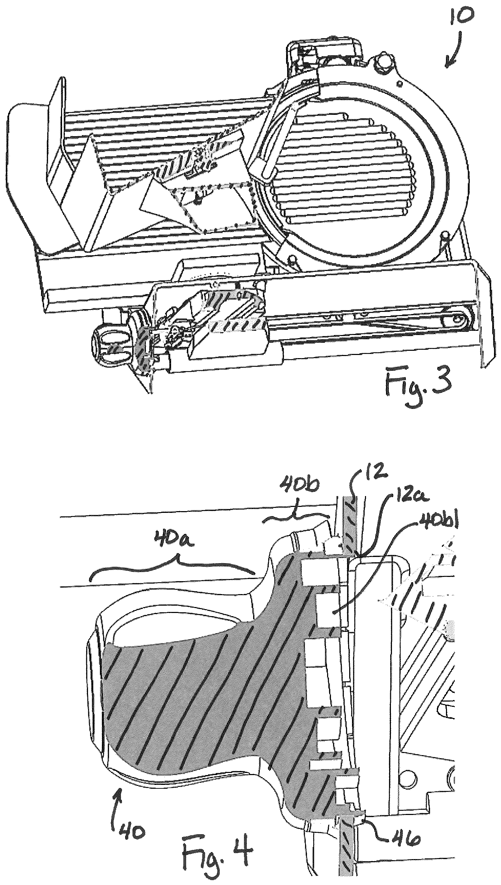

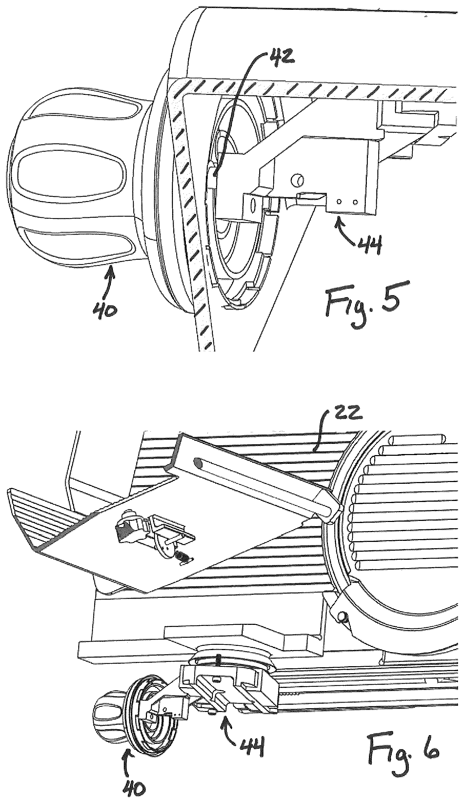

Figs. 3-5 show partial cross-section views of the slicer;
Fig. 6 shows a partial perspective view of the slicer, with base hidden;
Figs. 7A-7C show an embodiment of a knob;
Figs. 8A-8C show an intermediate configuration of a knob resulting from a first shot of a two-shot molding process;
Figs. 9A-9C show another embodiment of a knob;
Figs. 10A-10B show a knob with a sealing flange; and
Fig. 11 shows a multi-component knob assembly of the prior art.

### DETAILED DESCRIPTION

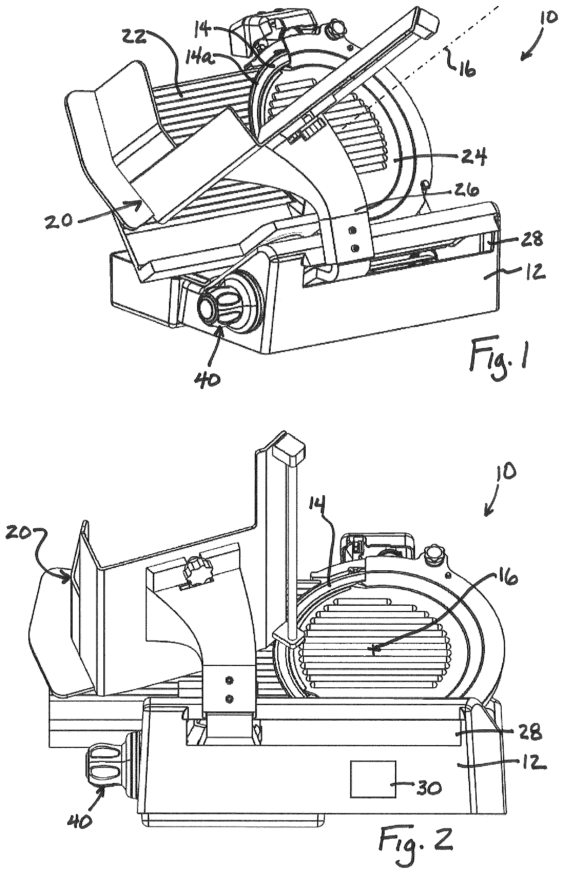

Referring to Figs. 1-2, a food product slicer 10 includes a housing or base 12 and a circular, motor-driven slicing knife 14 that is mounted to the housing for rotation about an axis 16. Fig. 2 depicts a right-side view of the slicer. The left side of Fig. 2, where the controls are located, is generally referred to as the front side of the slicer (which is where an operator stands for slicing), the right side of Fig. 2 is generally referred to as the rear side of the slicer. A food product can be supported on a manually operable (or motor driven) food carriage 20 which moves the food product to be sliced past the cutting edge 14a of the rotating slicing knife 14. The food carriage 20 reciprocates from left to right relative to Fig. 2, along a linear path so that the lower end of the bulk food product slides along the surface of a gauge plate 22, is cut by the knife 14 and then slides along a knife cover plate 24. Food carriage 20 includes a tray mounted on a tray arm 26 that orients the food carriage tray at the appropriate angle (typically perpendicular) to the knife cutting-edge plane. The food carriage arm reciprocates in a slot 28 at a lower portion of the housing 12. The carriage 20 can be moved manually (e.g., by a handle) and/or the carriage 20 may also be automatically driven (e.g., as by an internal motor 30 that drives a belt that is linked internally, directly or indirectly, to the arm 26).

A gauge plate system includes a rotatable knob 40 that includes a grip part 40a and an integral cam part 40b. The cam part 40b includes an axially facing spiral cam slot 40b1 that receives a follower pin 42 of an assembly 44 that is linked to move the gauge plate. At least part of the grip part 40a is external of the base 12 and at least part of the cam part 40b is internal of the base 12. The grip part 40a and the cam part 40b are formed together as a monolithic unit, which eliminates the need to assemble the parts together, and also eliminates the need for the shaft of the prior art assembly.

The knob 40 is connected to an opening 12a in the base 12, and the knob includes a plurality of retention clips 46 engaged with the opening 12a to retain the knob on the base. The retention clips are also formed as part of the monolithic unit. Here, the retention clips are equally spaced apart around the circumferential periphery of the knob on the cam part 40b. Each retention clip 46 is configured to flex radially inward as the cam end of the knob 40 is pushed axially into the opening 12a in a direction from the exterior and toward the interior of the base, and each retention clip 46 is configured to flex radially back outward after a retention edge 46 of the clip has moved inward of the opening 12a.

In embodiments, the knob further comprises a recessed track 40c in which a peripheral edge that defines the opening 12a is positioned for allowing sliding movement of the knob relative to the opening in the base, and the recessed track 40c is also part of the monolithic unit.

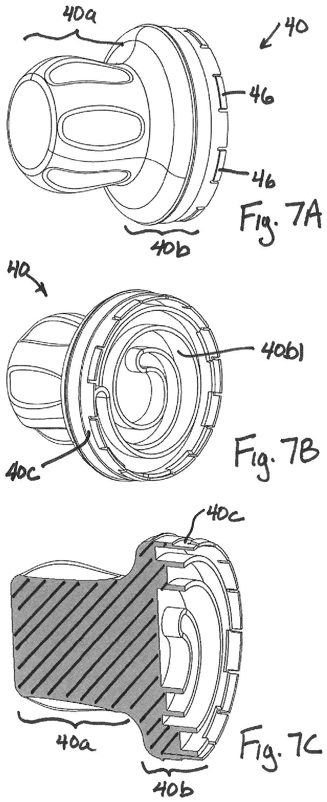

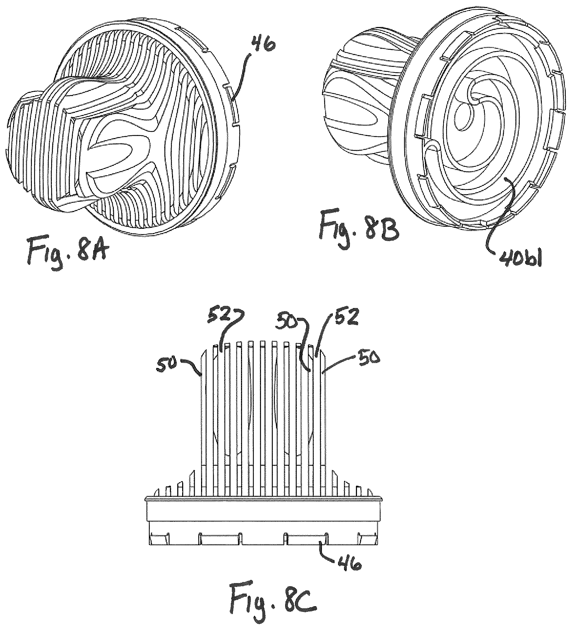

In embodiments, per Figs. 7A-7C and 8A-8C, the grip part 40a may be a solid body configuration (i.e., not hollow). Where the monolithic knob unit is a molded plastic unit, it may be formed by a two-shot injection mold process. In the first shot with a first plastic, the cam part 40b may be formed with axially extending plate portions 50 of the grip part, with channels 52 between the plates 50. In the second shot with a second plastic, the remainder of the grip part may be formed with plastic that covers/surrounds the plates 50 and fills in the channels 52. In some implementations, the first plastic and the second plastic may be the same. In other implementations, the first plastic and the second plastic may be different, with the first plastic being a material that is more resistant to wear (as may be caused by the sliding action of the pin 42) and/or with the second plastic being a material that is more grip friendly.

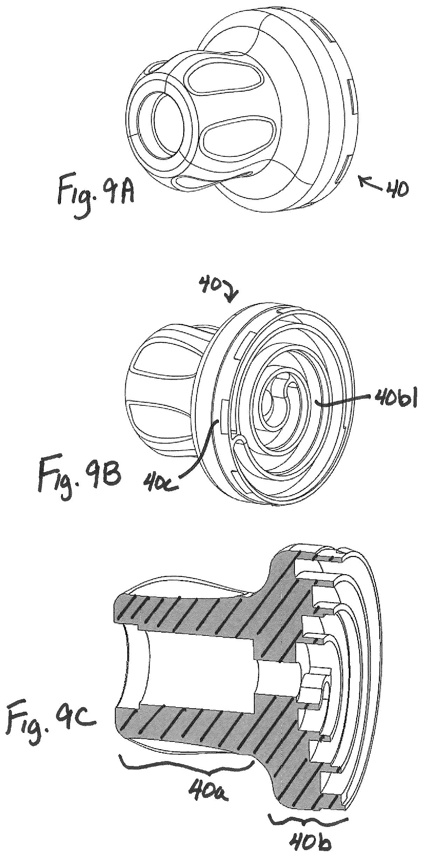

In other embodiments, per Figs. 9A-9C, the grip part 40a may be a hollow body configuration, with an end opening 40a1 that is subsequently closed off by, for example, a snap on cap.

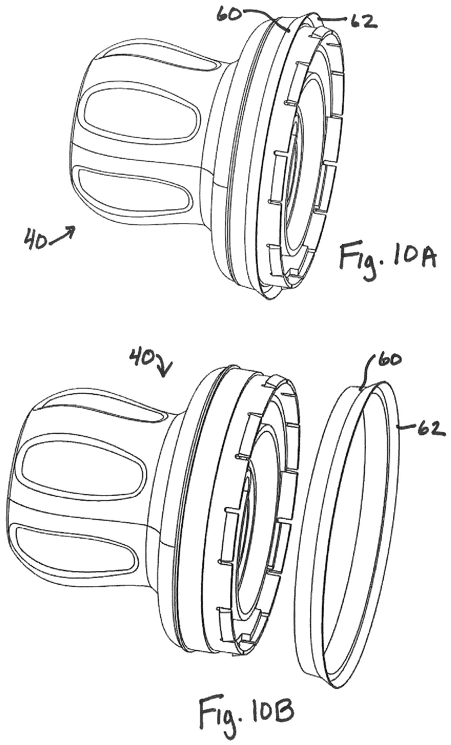

In either case (solid grip part or hollow grip part), per Figs. 10A-10B, the knob may include a sealing flange 60 that defines a lip 62 that presses against an external surface of the base 12 when the knob is attached to the base, for sealing. In implementations, the sealing flange 60 may be formed as part of the monolithic knob unit, but with a thickness and configuration that permits suitable flexing for sealing. In other implementations, the sealing flange 60 may be a separate component that axially engages onto an annular section or recess of the knob.

The described monolithic knob unit(s) (i) maintain the same functionality of prior art knobs, with fewer parts needed in the assembly by combining the knob, cam, bearing surface, and retention mechanism, (ii) increases the efficiency of assembly and reduces overall cost of the system, and (iii) reduces service requirements be reducing the system complexity and removing the number of opportunities for error.

It is to be clearly understood that the above description is intended by way of illustration and example only and is not intended to be taken by way of limitation. Variations are possible.

## Claims

1. A food product slicer, comprising:
a base;
a knife mounted for rotation relative to the base;
a carriage assembly mounted to the base for reciprocal movement back and forth past a cutting edge of the knife;
a gauge plate mounted for movement between a closed position that prevents slicing and multiple open positions that permit slicing at respective thicknesses;
a knob that is rotatable and linked for moving the gauge plate, wherein the knob comprises a grip part and a cam part, wherein at least part of the grip part is external of the base and at least part of the cam part is internal of the base or accessible from within the base, wherein the grip part and the cam part are formed together as a monolithic unit.

2. The food product slicer of claim 1, wherein the gauge plate is moved by manual rotation of the knob.

3. The food product slicer of claim 1, wherein the knob is connected to an opening in the base, wherein the knob further comprises a plurality of retention clips engaged with the opening to retain the knob on the base, wherein the plurality of retention clips are also formed as part of the monolithic unit.

4. The food product slicer of claim 3, wherein each retention clip is configured to flex radially inward as the knob is pushed axially into the opening and to flex radially outward after a retention edge of the retention clip has moved into and through the opening.

5. The food product slicer of claim 1, wherein the knob is connected to an opening in the base, wherein the monolithic unit comprises a recessed track in which a peripheral edge that defines the opening is positioned for allowing sliding movement of the knob relative to the opening in the base.

6. The food product slicer of claim 1, wherein the grip part is a solid body configuration.

7. The food product slicer of claim 6, wherein the monolithic unit is a molded plastic unit.

8. The food product slicer of claim 7, wherein the molded plastic unit is formed by a two-shot injection mold process.

9. A food product slicer, comprising:
a base;
a knife mounted for rotation relative to the base;
a carriage assembly mounted to the base for reciprocal movement back and forth past a cutting edge of the knife;
a gauge plate mounted for movement between a closed position that prevents slicing and multiple open positions that permit slicing at respective thicknesses;
a gauge plate control knob including a grip part and a cam part with a cam slot, wherein the grip part and the cam part are molded together as a monolithic unit.

10. The food product slicer of claim 9, wherein the base includes an opening to which the knob is connected, wherein the knob includes one or more retention clips engaged with the opening to retain the knob on the base, wherein the one or more retention clips are also molded as part of the monolithic unit.

11. The food product slicer of claim 10, wherein each retention clip is configured to shift radially inward vi engagement with the opening as the knob is pushed axially into the opening and to shift radially outward after a retention edge of the retention clip has moved internally of the base.

12. The food product slicer of claim 9, wherein the base includes an opening to which the knob is connected, wherein the monolithic unit comprises a recessed track in which a peripheral edge that defines the opening is positioned for allowing sliding movement of the knob relative to the opening.

13. The food product slicer of claim 9, wherein the monolithic unit is a molded plastic unit.

14. The food product slicer of claim 13, wherein the molded plastic unit is formed by a two-shot injection mold process.
